# EUROPEAN PATENT APPLICATION

(11) **EP 1 770 817 A2**
(43) Date of publication of application: **04.04.2007**
(21) Application number: 06020166.2
(22) Date of filing: 26.09.2006
(51) Int. Cl.: H01M 10/40

(54) **Surface-lithiated metal oxide nanoparticles for lithium battery electrolytes**

(30) Priority: 29.09.2005 US 721655 P; 19.09.2006 US 522913
(71) Applicant: Air Products and Chemicals, Inc., Allentown, PA 18195-1501 (US)
(72) Inventor: Bednarik Jacqueline Chelius, Sinking Spring, PA 19608 (US); Elder Delwin Lerone, Allentown, PA 18104 (US); Kirner John Francis, Orefield, PA 18069 (US); Kurian Mary, 1122, Kingwood, TX 77339 (US); Miller Susan Ann, Orefield, PA 18069 (US)
(74) Representative: Kador & Partner

(57) **Abstract**

A composite polymer electrolyte for lithium batteries comprising ceramic particles with negative surface charge balanced by Li⁺ cations is disclosed herein. Optionally, the composite also contains lithium salt and/or solvent. The material is prepared by exposing oxide particles to a Li-containing solution at a pH greater than the isoelectric point of the oxide, isolating the solid from the solution, and drying.

## Description

This Application claims the benefit of Provisional Application No. 60/721,655, filed on September 29, 2005. The disclosure of this Provisional Application is hereby incorporated by reference.

### BACKGROUND OF THE INVENTION

Lithium-ion rechargeable batteries offer benefits over other commercial rechargeable batteries because of high voltage, light weight, and high energy density. Such batteries are of interest for a number of applications such as portable power, where energy density is of great importance, and hybrid electric vehicles, where power density is of great importance.

Lithium ion batteries are comprised of an anode, a cathode, and a separator filled with electrolyte. The active material for the anode is typically a Li/carbon insertion compound. The electrolyte is typically an organic solvent, such as a mixture of alkyl carbonates, containing a dissolved Li salt, such as LiPF₆. During discharge, Li at the anode is oxidized to form Li⁺ cations, which diffuse through the electrolyte to the cathode, typically a transition metal oxide, where the Li⁺ ions are intercalated into the oxide lattice as the transition metal is reduced.

The replacement of the separator filled with liquid electrolyte with a lithium ion conducting polymer electrolyte membrane would enable the fabrication of flexible, compact, laminated solid-state structures, available in varied geometries. They would have inherently lower safety risks because of the lack of the possibility of liquid leaks, and the possibility of using Li metal foil anodes would yield high energy cells.

Metal oxide nanoparticles such as silica, alumina, and titania are often used to increase the ionic conductivity and mechanical properties of the polymer electrolytes. However, the metal oxides have hydroxyl groups where the crystal lattice is imperfect such as at the surface of the particle. The surface protons can be acidic and can interfere with ionic conductivity measurement of the ion of interest in polymer electrolyte formulations. The acidic surface protons can also react and decompose other materials in the formulation, and react electrochemically in electrochemical devices such as batteries producing hydrogen or degrading the electrodes.

### BRIEF SUMMARY OF THE INVENTION

The instant invention solves problem associated with surface hydroxyl groups or surface protons by replacing at least a portion of the surface acidic protons on particles with lithium ions (e.g., ceramic, metal oxide, among other particles including nanoparticles). Unlike the protons, the lithium ions are stable chemically and contribute to the operation of a lithium battery (e.g., the lithium ions are reduced at the anode in accordance with desired electrochemical reduction within a battery cell). The lithium ions may also be mobile and contribute to the lithium ion mobility. The surface lithiated particles can also improve the ionic conductivity of polymer electrolytes.

The advantage of surface lithiation of particulate additives for lithium-ion conducting polymer electrolytes extends to all types of particles including ceramics and metal oxides. By "metal oxide particles" it is meant an inorganic material composed of one or more metals or semimetals and oxygen. While any suitable metal oxide particle can be employed, examples of suitable metal oxide particles comprise at least one member selected from the group consisting of Al₂O₃, SiO₂, BPO₄, BaTiO₃, mixtures thereof, among other oxides. The average particle size of the surface lithiated metal oxide particles is less than or equal to about 5 micrometers, and usually less than about 100 nanometers. By "ceramic" is it meant an inorganic, nonmetallic, non-molecular material including both amorphous and crystalline materials, porous and non-porous. While any suitable ceramic particle can be lithiated examples of suitable particles comprise at least one member selected from the group consisting of Al₂O₃, SiO₂, TiO₂, MgO, ZrO₂, Nb₂O₅, Cr₂O₃, SnO₂, Fe₂O₃, and PbO; blends of metal oxides such as SiO₂/Al₂O₃; various phases of ceramic materials such as alpha-alumina, beta-alumina, or gamma-alumina; mixed metal oxides such as aluminosilicates, BaTiO₃, or BPO₄; fumed metal oxides such as fumed silica; synthetic or natural clays; zeolites; or layered double hydroxides and organosilicates (e.g., Class I and Class II). The ceramic particle may already contain lithium, such as LiAlO₂ or Li₃N, as long as the surface lithium-ion content can be increased. The average particle size of the surface lithiated ceramic particle is less than or equal to about 5 micrometers, and usually less than about 100 nanometers.

Lithiated nanoparticles can be added to polymer electrolyte formulations to increase conductivity. A conductivity increase is also seen with particle loadings ranging from about 1 to about 50 wt% loading. By employing the inventive lithiated particles, a relatively high loading of particles can be used because the lithiated particles maintain sufficient Li-ion concentrations even at relatively high particle loadings.

One aspect of the invention relates to a composition comprising surface lithiated particles (e.g., ceramic particles with negative surface charge balanced by Li⁺ cations). The instant invention can normally form a lithiated surface upon any particle (e.g., ceramic or metal oxide particles) that can display a negative zeta-potential.

Another aspect of the invention comprises a process of manufacturing the surface lithiated particles. The lithiated particles can be prepared by exposing particles to a Li-containing solution at a pH greater than the isoelectric point of the oxide, isolating the solid from the solution, and drying.

Another aspect of the invention comprises a new composition of matter comprising a composite of polymer and the surface lithiated particles. Optionally, the composite also comprises lithium salt and/or solvent. If the polymer electrolyte does not contain solvent, it may be called a solid polymer electrolyte (SPE). If the polymer electrolyte does contain more than about 50wt% solvent, it may be called a gel polymer electrolyte (GPE). The inventive composite normally has an ionic conductivity of greater than about 10⁻⁶ and usually about 10^{-3 to -4} S/cm.

In yet another aspect of the invention, the composite material comprises a thin film or membrane.

Another aspect of the invention comprises a liquid electrolyte composed of electrolyte salt, electrolyte solvent, and surface lithiated particles.

Another aspect of the invention comprises an electrochemical cell comprising an anode, a cathode, and an electrolyte/separator comprising the surface lithiated ceramic composite material thin film (e.g., lithiated particles at least partially in contact with or surrounded by a matrix material). The anode and/or cathode can comprise the inventive composite.

### BRIEF DESCRIPTION OF SEVERAL VIEWS OF THE DRAWINGS

Figure 1 is a graphical representation of external surface area of particles v. particle diameter.

Figure 2 is a diagram of a diffuse double layer for a positively charged particle.

Figure 3 is graphical representation of lithium in wt.% v. particle diameter.

Figure 4 is a graphical representation of zeta potential as a function of pH.

Figure 5 is a graphical representation of discharge capacity as a function of area specific impedance.

Figure 6 is a graphical representation of cell voltage as a function of time.

Figure 7 is a graphical representation of cell voltage as a function of time.

Figure 8 is a graphical representation of cell voltage as a function of time.

### DETAILED DESCRIPTION OF THE INVENTION

Particulate materials such as silica, alumina, and titania typically include hydroxyl groups where the crystal lattice is imperfect such as at the surface of the particle. The surface protons are acidic and can interfere with ionic conductivity measurement of the ion of interest in polymer electrolyte formulations. The acidic surface protons can also react electrochemically in electrochemical devices such as batteries thereby producing hydrogen or degrading the electrodes.

One aspect of the invention comprises a composition comprising ceramic particles with negative surface charge balanced by Li⁺ cations. This includes surface lithiated ceramic particles such as Al₂O₃, SiO₂, TiO₂, MgO, ZrO₂, Nb₂O₅, Cr₂O₃, SnO₂, Fe₂O₃, and PbO; blends of metal oxides such as SiO₂/Al₂O₃; various phases of ceramic materials such as alpha-alumina, beta-alumina, or gamma-alumina; mixed metal oxides such as aluminosilicates, BaTiO₃, or BPO₄; fumed metal oxides such as fumed silica; synthetic or natural clays; zeolites; or layered double hydroxides. In general, any particle that can display a negative zeta-potential can be surface lithiated.

The surface Li-ion content may range from about 1 to about 100% of the surface proton active sites. Another manner of quantifying the surface lithium content is by a total lithium content that is greater than about 0.01 wt % up to about 10 wt %. Alternatively, the lithium content can be characterized by a M/Li ratio that is less than about 5 mole % (e.g., usually less than 2 mole %), wherein M comprises an alkali or alkaline earth metal cation. Yet another manner of specifying the lithium content is based on the chemical composition BET surface area, for which the lithium content is from about 6x10⁻⁷ g (Li)/m² to about 6x10⁻⁵ g (Li)/m² (5 Li⁺/nm² for SiO₂ - the value will vary depending upon the particle composition). A further method for specifying the lithium content is as a product by process in which the sample was prepared by exposing the ceramic particles to a solution containing Li⁺ at a pH that gives a negative zeta-potential for the ceramic particle.

The surface lithiated particles are normally substantially free of water. By "substantially free" it is meant that the surface contains less than about 0.5 wt%, usually less than about 0.1 wt %, and typically less than about 100 ppm by weight water.

In one aspect of the invention, the surface lithiated particles are roughly spherical or with an aspect ratio less than about 2 and an average primary particle size of less than about or equal to 5 micrometers, and usually less than about 100 nanometers. The particle size may be determined by standard techniques known in the art such as B.E.T. surface area measurements and electron microscopy.

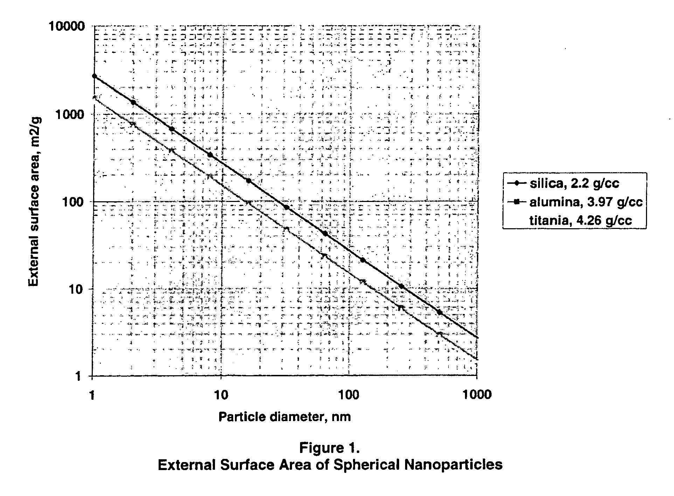

The surface area of the particle without surface lithiation is normally greater than about 1 m²/g, and typically greater than about 10 m²/g. The surface area of the surface lithiated particle is normally greater than about 1 m²/g, and usually greater than about 10 m²/g. The surface area may be determined by standard techniques known in the art such as B.E.T. surface area techniques. For example, the N₂ BET surface area for SiO₂ can be calculated as a function of particle size assuming spherical primary particles and a density of about 2.2 g/cc. Figure 1 illustrates the external surface area as a function of particle diameter for SiO2, Al2O3 and TiO2 particles. The BET for a specific particles will vary depending upon particle diameter, composition, morphology, among other parameters.

In one aspect of the invention, the lithiated particles are substantially discrete. In another aspect, the lithiated particles are linked in secondary structures or incorporated within a surrounding matrix (e.g., a polymer, conductive polymer, among other suitable matrix materials). The amount of lithiated particles is about 2 to about 20 wt%. The size of the particles is typically less than or equal to about 5 micrometers, and usually less than about 100 nanometers.

In another aspect of the invention, the surface lithiated particle may comprise a core composed, for example, of a first ceramic material and a shell of a different ceramic material. The size of the particles is typically less than or equal to about 5 micrometers, and usually less than about 100 nanometers. The shell may be about 2 to about 50wt% of the thickness of the particle.

In another aspect of the invention, the surface lithiated particle may be a lithium-containing ceramic such as LiAlO₂ or Li₃N that has an increased surface Li-ion content in comparison to the standard material. In this case, the lithium content is defined by a total lithium content that is at least about 0.01 wt % greater than the lithium content calculated for the standard material.

In another aspect of the invention, the surface lithiated particle may be a Li-ion conductor such as Li₃PO₄, Lil-Li₂S-B₂S₃, or Li-ion conductor with a Nasicon structure such as Li_{1.4}[Al_{0.4}Ge_{1.6}(PO₄)₃] that has an increased surface Li-ion content relative to the standard material. By "standard material" it is meant a material or particle that has not been treated in accordance with the inventive lithiation process (e.g., Li_{1.4}[Al_{0.4}Ge_{1.6}(PO₄)₃] would be the standard material for lithiated Li_{1.4}[Al_{0.4}Ge_{1.6}(PO₄)₃]).

In another aspect of the invention, the surface lithiated particle may be microporous or mesoporous materials such as MCM-41, mesoporous silica, zeolites, or clays that have an increased surface Li-ion content relative to the standard material.

In another aspect of the invention, the surface lithiated particle may be a lithium-containing microporous or mesoporous material such as MCM-41 mesoporous silica, zeolites, or clays that have an increased surface Li-ion content relative to the standard material.

In one embodiment of the invention, the surface lithiated particles are substantially non-microporous, as determined, for example from *t*-plots based on N₂ adsorption at about -196°C.

In another aspect of the invention, the surface lithiated particles are tubular with an average diameter of less than or equal to about 5 micrometers and an aspect ratio of about 2:1 to about 10,000:1.

In another aspect of the invention, the particles may have partial surface organic functionalization. The organic functionalization may range from about 10 to about 90% of the surface proton active sites. In this aspect of the invention, the surface Li-ion content may range from about 1 to about 90% of the surface proton active sites. A portion of the metal oxide surface sites may still be available for lithiation since the surface treatment for dispersibility can include relatively bulky organic groups.

In another aspect of the invention, the particles may have partial surface organic functionalization in order to cause the particle to be more hydrophobic or more hydrophilic. The organic functionalization may range from about 10 to about 90% of the surface proton active sites. In this aspect of the invention, the surface Li-ion content may range from about 1 to about 90% of the surface proton active sites.

Another aspect of the invention comprises a process of manufacturing the surface lithiated particles. The lithiated particles can be prepared by exposing particles to a Li-containing solution at a pH greater than the isoelectric point of the particle to give a negative zeta-potential, isolating the solid from the solution, and drying The pH is normally at least 0.1 to 1 pH unit greater than the isoelectric point, up to a pH of about 12.

The surface charge on hydrous metal oxide particles in aqueous solution is established by the charge-determining ions H⁺ or OH⁻ protonating or deprotonating the MOH bonds on the surfaces of the particles:

M-OH + H⁺ = M-OH₂⁺

or

M-OH + OH⁻ = M-O⁻ + H₂O.

The pH at which the particle is neutrally charged is called the point of zero charge (PZC). At pH < PZC, the first equation predominates and the particle is positively charge; at pH > PZC, the second equation predominates and the particle is negatively charged. The relative ease with which protons are added or removed from the oxide (i.e., the acidity of the MOH group) depends on the identity of the metal atom. Values of PZC for several particles are given in Table 1.

**Table 1. Point of Zero Charge of Selected Oxides***

| oxide type | typical range of PZC | oxide example | PZC |
|---|---|---|---|
| M₂O | 11.5 < pH | | |
| MO | 8.5<pH<12.5 | MgO | 12 |
| M₂O₃ | 6.5 < pH < 10.5 | Fe₂O₃ | 8.6 |
| | | Al₂O₃ | 9.0 |
| | | Cr₂O₃ | 8.4 |
| MO₂ | 0 < pH < 7.5 | SiO₂ | 2.5 |
| | | SnO₂ | 4.5 |
| | | TiO₂ | 6.0 |
| M₂O₅, MO₃ | pH < 0.5 | | |

| | | | |
|---|---|---|---|
| *Brinker, C. J.; Scherer, G. W.; Sol-Gel Science; Academic Press: San Diego, 1990; p241; hereby incorporated by reference. | | | |

The potential from the surface charge attracts oppositely charged ions (counterions) that are present in solution. The magnitude of the surface potential depends on the departure of the pH from the PZC. Some of the counterions are specifically adsorbed by the surface; the remainder of the counterions useful to balance the surface charge are in a diffuse layer. The potential reduces as a function of the distance from the surface as shown in

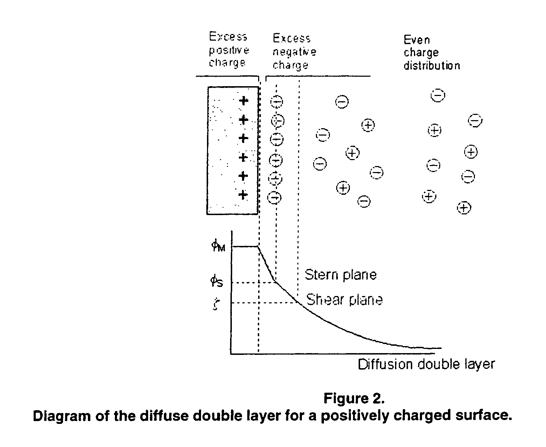

Figure 2, reaching zero when the surface charge has been neutralized.

The potential at the shear plane, which separates the region of solution that moves with the particle from the region that flows freely, is conveniently measured and that potential is called the zeta-potential. The pH at which the zeta potential is zero is called the isoelectric point (IEP), which may not be identical to the PZC.

For surface lithiating metal oxide nanoparticles, the particles will be dispersed in a solution comprising LiOH, and the surface will be negatively charged, opposite of the example shown in Figure 2. Excess Li⁺ counterions will be specifically adsorbed and also present in the diffuse layer. When the nanoparticles are isolated from solution by filtration or centrifugation the Li⁺ counterions will accompany the solid. Depending on the thickness of the layer of solution adhering to the particles and the concentration of LiOH, LiOH dissolved in the solution may also accompany the particles.

Plots of zeta-potential as a function of pH for the different particles illustrates surface Li concentration via the relative magnitude of the negative surface potential. The pH for lithiation will differ for the different particles as seen from Table 1 of PZC.

Alternatively, particles could be surface lithiated by solid state reaction with a Li source such as LiOH, Li₂O, Li₂CO₃, among other sources of lithium, at elevated temperatures, and dried to remove water to less than about 0.5 wt %, usually less than about 0.1 wt %, an typically less than about 100 ppm. Alternatively, the particles might be slurried in an organic solvent with the lithium source, and the water removed from the mixture by electrolysis to a level less than about 100 ppm.

Another aspect of the invention comprises a composite comprising at least one polymer and the surface lithiated particles. Optionally, the composite also comprises at least one lithium salt and/or at least one solvent, forming a composite polymer electrolyte. If the polymer electrolyte does not contain solvent, it may be called a solid polymer electrolyte (SPE). If the polymer electrolyte does contain more than about 50wt.% solvent, it may be called a gel polymer electrolyte (GPE). The composite polymer electrolyte has ionic conductivity greater than about 10e-6 S/cm.

The polymer can comprise a material in which the monomers contain a hetero atom with a lone pair of electrons available for the metal ions of a metal salt to attach to and move between during conduction, when the polymer is mixed with a metal salt. The polymer can comprise a linear polymer, a random copolymer, a block copolymer, a comb-branched block copolymer, a network structure, a single ion conductor, among others. Representative examples of suitable polymers comprise at least one member selected from the group consisting polyvinylidene fluoride or chloride or copolymer of their derivatives, poly(chlorotrifluoroethylene), poly(ethylene-chlorotrifluoro-ethylene), poly(fluorinated ethylene-propylene), PVDF-HFP, polyethylene oxide (PEO), poly(ethyl oxazoline), polypropylene oxide (PPO), oxymethylene linked PEO, PEO-PPO-PEO crosslinked with trifunctional urethane; poly(bis(methoxy-ethoxy-ethoxide))-phosphazene (MEEP) and other polyphosphazenes; a triol-type PEO crosslinked with difunctional urethane, poly((oligo)oxyethylene)methacrylate-co-alkali metal methacrylate; polyacrylonitrile (PAN), polymethylmethacrylate (PMMA), polymethylacrylonitrile (PMAN); polysiloxanes and their copolymers and derivatives, polyvinylidene fluoride or chloride and copolymers of their derivatives, poly(chlorotrifluoro-ethylene), poly(ethylene-chlorotrifluoroethylene), poly(fluorinated ethylene-propylene), acrylate- based polymer, poly(N-vinylpyrrolidone), poly(4-vinylpyridine), poly(ethyloxazoline), polyamide, polyamide-imide, polyether-imide, polyimide, polybenzimidazole, polybenzoxazole, polysulfone, polyether-ether-ketone, polyurethane, cellulose polymers, polyarylethers, mixtures thereof, among other polymers either condensed or crosslinked to form a different polymer. The polymer content may be from about 5 to about 90 wt%.

The salt can comprise any suitable salt. Examples of suitable salts comprise at least one member selected from the group consisting of Lil, LiPF6, LiCIO4, LiAsF6, LiBF₄, LiAIC14, LiOSO2CF3, LiC(S02CF3)3, LiN(SO2CF3)2, LiN(SO₂CF₂CF₃)₂ (LiBETI), LiBOB, Li₂B₁₂FₓH₁₂₋ₓ,mixtures thereof, among others. Suitable Li2B12FxH12-x salts are disclosed in U.S. Patent Application Nos. 10/655476, 10/910,529, 10/924,293 and U.S. Patent No. 6,781,005; all hereby incorporated by reference. The lithium salt may be present from about 0 to about 75 wt%. When lithium salt is present, greater than about 0.1 % of the lithium in the composite polymer may be provided by the lithiated ceramic particles.

The solvent component of the composite may comprise any suitable material such as carbonates. Examples of suitable solvents comprise at least one member selected from the group consisting of ethylene carbonate (EC), propylene carbonate (PC), dimethyl carbonate (DMC), or ethyl methyl carbonate (EMC), diethyl carbonate (DEC), BC, etc., esters such as gamma-butyrolactone (GBL), γ-valerolactone (γ-VL), n-methyl-oxazolidinone (NMO), ethyl acetate (EA), methyl butyrate (MB), ethyl butyrate (EB), etc., ethers such as tetrahydrofuran (THF), 2-methyl tetrahydrofuran (2-Me-THF), 1,3-dioxolane (1,3-DL), 4-methyl-1,3-dioxolane (4-Me-1,3-DL), 2-methyl-1,3-dioxolane (2-Me-1,3-DL), dimethoxymethane (DMM), dimethoxyethane (DME), diethoxyethane (DEE), diethylene glycol dimethyl ether (diglyme), diethylene glycol diethyl ether ethyl (diglyme), triethylene glycol dimethyl ether (triglyme), etc., as well as N-methylpyrrolidone, acetonitrile, 1,4-dioxolane, ethylacetate, cyclohexanone, or ionic liquids, sulfolane, glycol borate esters, diphenylsulfone, benzophenone, fluorinated ethers, and fluorinated carbonates, mixtures thereof, among others.

The solvent content may be from about 0 to about 90 wt% of the composite. In some aspects, the solvent content may be about 15 to about 20% to obtain optimum combination of ionic conductivity and mechanical strength.

The surface lithiated particle content may be from about 0.5 to about 20 wt% of the composite.

The water content of the composite polymer electrolyte containing surface lithiated ceramic particles is less than about 2 wt%, normally less than about 0.5 wt %, and typically than about 100 ppm by weight. In some cases, the composite polymer is substantially free of water.

Another aspect of the invention comprises a liquid electrolyte composed of electrolyte salt, electrolyte solvent, and surface lithiated particles. The surface lithiated particle content may be from about 0.5 to about 20 wt%.

In another aspect of the invention, a dispersion of the lithiated particles may be improved by adding dispersing agents such as surfactants, wetting agents, and dispersants. The amount of dispersing agent can comprise about 1 to about 50 wt% of the ceramic particles. The dispersing agent is used to substantially uniformly disperse the ceramic particles in the polymer and keep them dispersed until the film is dry.

In another aspect of the invention, the polymer may comprise an ionic polymer such as at least one member selected from the group consisting of lithium salts of sulfonate polymers such as poly(styrene-4-lithium sulfonate), lithium salts of sulfonated polysulfone, lithium salts of poly(2-acrylamido-2-methyl-1-propanesulfonic acid); lithium salts of OH-containing polymers such as Phenoxy or hydroxyethylcellulose; lithium salts of NH-containing polymers such as polybenzimidazole or polyamides and mixtures thereof. Sulfonate polymers are disclosed in U.S. Patent Application No. 60/692,885 ; hereby incorporated by reference.

In another aspect of the invention, the polymer may be a low glass transition temperature polymer, such as poly(ethylene oxide), or a high glass transition temperature polymer, such as polybenzimidazole.

In another aspect of the invention, the composite polymer electrolyte material comprises a thin film or membrane (e.g., measuring about 9 microns to about 500 microns thickness).

In another aspect of the invention, the surface lithiated particles are well-dispersed in the composite polymer electrolyte (e.g., the particles do not substantially settle or form stratified areas). That is, a substantially uniform dispersion of the ceramic particles in the previously described solid polymer film as well as in a dispersion or solution used for making the film.

In one aspect of the invention, the lithiated particles in the composite polymer electrolyte are substantially discrete. In other embodiments, the lithiated primary particles are linked in secondary or tertiary structures in the composite polymer electrolyte. The amount of lithiated particles ranges from about 2 to about 20wt.%.

In another aspect of the invention, the composite polymer electrolyte has a relatively higher ionic conductivity at some temperature from about -60 C to about 100 C than the same polymer electrolyte formulation without surface lithiated particles. The ionic conductivity at room temperature is greater than about 10⁻⁶ S/cm.

In another aspect of the invention, the composite polymer electrolyte has a greater mechanical strength at a temperature of from about -60 C to about 100 C than the same polymer electrolyte formulation without surface lithiated ceramic particles. For example the compression modulus at 0.1 Hz may be increased by a factor of about 5 to about 500, as measured by dynamic mechanical analysis.

The composite polymer electrolyte having improved mechanical strength is useful for electrode fabrication or lamination as well as to maintain capacity during cycling with its concomitant change in volume of the active electrode materials. The mechanical strength may be measured by elastic modulus.

The composite polymer electrolyte will have an appropriate solvent content for the polymer and lithiated ceramic particle composition to provide acceptable combination of both ionic conductivity and mechanical strength at the temperature of use. In one aspect the polymer electrolyte can comprise about 35 wt% poly(vinylpyrrolidone), about 35 wt% LiTFSI, about 10 wt% lithiated particles, and about 20 wt% gamma-butyrolactone solvent.

In another aspect of the invention, the composite polymer electrolyte formulation is made by mixing the solvent, lithium salt, and surface lithiated ceramic particle prior to adding the polymer. Typically, the viscosity will increase upon addition of the polymer. The resultant formulation can be cast into a film.

In one embodiment of the invention, Class I or Class II lithiated organosilicates are prepared in situ via sol-gel chemistry with LiOH, for examples as per US Patent No. 6544690 (hereby incorporated by reference), followed by drying to less than about 2 wt % water, usually less than about 0.5 wt %, and typically less than 100 ppm water.
Certain conditions form a "ceramic cage" in situ, whereas other conditions form nanoparticles in situ.

In another aspect of the invention, stirring, high shear mixing, homogenization, sonication, or heating is applied to help dispersion of the surface lithiated ceramic particles. Any suitable process parameters can be used such as operating the sonication bath at about 100 to about 200 watts.

The composite polymer film may be prepared by solvent casting, dry mixing and compression, doctor blade coating, reverse roll coating, slot die coating, ink jet, among other film forming methods. The film thickness is less than about 500 micrometers, and normally less than about 100 micrometers.

Another aspect of the invention comprises an electrochemical cell, such as a battery, comprising an anode, a cathode, and an electrolyte separator comprising the composite polymer electrolyte material thin film.

In another aspect of the invention, a battery formed with a composite polymer electrolyte containing surface lithiated ceramic particles has a longer cycle life than a battery without surface lithiated ceramic particles.

In another aspect of the invention, a battery formed with a composite polymer electrolyte containing surface lithiated ceramic particles has a longer cycle life than a battery with ceramic particles without surface lithiation.

In another aspect of the invention, the battery comprises a lithium battery.

In another aspect of the invention, the battery comprises a lithium-ion battery.

In another aspect of the invention, the battery comprises a lithium polymer battery.

In another aspect of the invention, the composite polymer containing surface lithiated ceramic particles are used in with the electrode materials of the electrochemical device.

In another aspect of the invention, the battery comprises a conventional separator (typically microporous polyethylene and/or polypropylene) filled with the composite polymer electrolyte of the present invention or layered with a film of the composite polymer electrolyte of the present invention.

In another aspect of the invention, the battery comprises a conventional separator (e.g., typically microporous polyethylene and/or polypropylene) filled with a liquid electrolyte mixture composed of electrolyte salt, electrolyte solvent, and surface lithiated particles. The surface lithiated particle content may be from about 0.5 to about 20 wt% of the electrolyte mixture.

In another aspect of the invention, the composite polymer may comprise polymer, surface lithiated ceramic particle, and solvent.

In another aspect of the invention, the composite polymer may comprise polymer, surface lithiated ceramic particle, and lithium salt.

The anode in the electrochemical cell may be comprised of at least one member selected from the group consisting of lithium metal, carbons, graphite, graphite carbons, lithium titanate, or other lithium intercalation and insertion compounds or alloys.

The cathode in the electrochemical cell may be comprised of LiCoO₂, LiNi₍₁₋ₓ₎CoₓO₂, LiMn₂O₄, LiFePO₄, vanadium oxide, manganese oxide, mixtures thereof, among others.

The following Examples are provided to illustrate certain aspects of the instant invention and shall not limit the scope of any claims appended hereto.

### Example 1

### Theoretical lithium content for surface lithiated silica particles

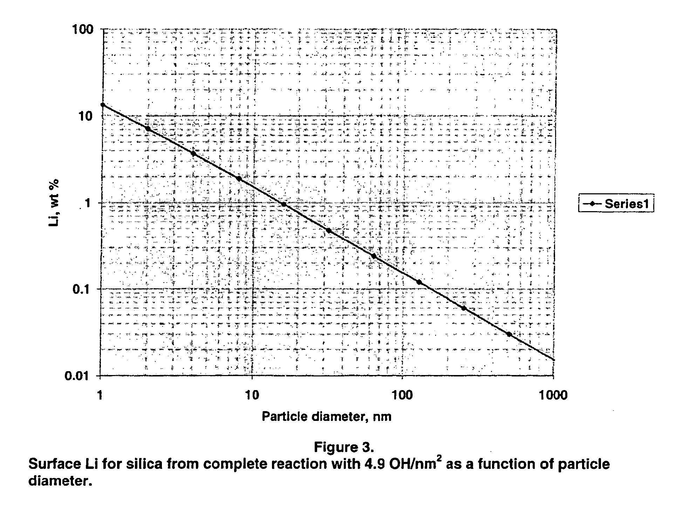

The weight loading of lithium can be calculated for silica particles as a function of particle diameter assuming spherical particles and an OH surface concentration reported in the literature of 4.9 OH/nm² (Brinker et al. supra, p624) Figure 3 shows wt % Li for silica from complete reaction with surface hydroxyls as a function of particle diameter

Thus complete lithiation of a 100 nm silica particle, for example, would result in a lithium content between 0.1 and 0.2 wt %, which is readily detectable by techniques used for elemental analysis.

Somewhat smaller particles might be required to establish the presence of surface lithium for particles whose naturally occurring or stiochiometric lithium content is several percent.

### Example 2

### Experimental results with Al₂O₃, SiO₂ and TiO₂ nanoparticles

Al₂O₃ nanoparticles (30 nm) were obtained from Nanotechnologies Inc.. Aerosil 200 fumed silica nanoparticles (12 nm) were obtained from Degussa. TiO2 nanoparticles (25-52nm) were obtained from NanoTek..

Approximately 3 wt % Al₂O₃, SiO₂ or TiO₂ nanoparticles were dispersed in aqueous LiOH at various pH levels. Samples with negative surface charge as indicated by zeta potential measurements were isolated and analyzed. The samples were dried at 42°C and heat treated at 650°C in air for 4 h. The samples were analyzed for Li content by AA-ICP and for surface area by N₂ BET. The nominal diameter of the primary particles was calculated from the surface area assuming spherical particles and densities of 2.2 g/cc for SiO₂ and 3.97 g/cc for Al₂O₃ and 4.26g/cc for TiO2 Table 2 contains the sample Li content by AA-ICP, surface area by N₂ BET, and water content by TGA.

**Table 2. Sample surface area by N₂ BET, Li content by AA-ICP, and water content by TGA**

| sample | Al₂O₃ | SiO₂ | TiO₂ | Li-Al₂O₃ | Li-SiO₂ | Li-TiO₂ |
|---|---|---|---|---|---|---|
| | | | | | | |
| | Native* | Native | Native | Surface lithiated | Surface lithiated | Surface lithiated |
| N₂ BET surface area, m²/g | 35 | 195 | 39 | 44 | 147 | 5 |
| Nominal diameter, nm | 43 | 14 | 36 | 34 | 18 | 310 |
| Li content, wt % | - | - | | 0.1 | 0.1 | 0.3 |
| H₂O loss in TGA above 150°C, wt % | - | - | - | - | 0.45 | - |
| H₂O loss in TGA above 650°C, wt % | - | - | - | - | 0.07 | - |

| | | | | | | |
|---|---|---|---|---|---|---|
| * The term "native" refers to a nanoparticle prior to surface lithiation. | | | | | | |

The samples substantially maintain BET surface area, and contain 0.1-0.2 wt % Li.

The lithiated Al₂O₃, SiO₂ and TiO2 were evaluated in polyvinylpyrrolidone (PVP, MW 1.3 x 10⁶ g/mol)/lithium bis(trifluoromethanesulfonimide) (LiTFSI)/gamma-butyrolactone (GBL) electrolytes for conductivity enhancement. The reagents were brought into an Ar-filled glove box with oxygen concentration less than 1 ppm and water concentration less than 2 ppm. The native and surface lithiated nanoparticles were dried by heating to 150°C in a vacuum oven in the glove box for at least 16 h. PVP and LiTFSI were dried by heating to 90°C in a vacuum oven in the glove box for at least 16 h. GBL was used as received and only opened in the glove box.

In an Ar-filled glove box with oxygen concentration less than 1 ppm and water concentration less than 2 ppm, 0.45 g LiTFSI was dissolved in 2.74 g GBL in a glass vial. 0.075 g nanoparticle powder was added to the solution, the vial capped, removed from the glove box, and sonicated for 1-2 h. The vial was returned to the glove box, 0.30 g PVP was added, and the mixture was heated at 130°C for 10-60 min. A film was formed by drop casting approximately one third of the solution on an aluminum pan and placing the pan in a vacuum oven at atmospheric pressure at 130°C to evaporate off the solvent. Samples were removed at times from 30 to 120 min to provide samples with various levels of solvent.

The solvent content was determined by TGA/IR. TGA analyses were performed by ramping the sample in the TA 2050 TGA at 10 °C/min. from 25 °C to 500 °C in N₂. The IR spectra were collected on the Nicolet AVATAR IR using 4 cm-1 resolution with a DTGS IR detector and a gain of 1, co-adding 45 spectra creates an average spectrum over each 1-minute interval. By collecting 55 sets of spectra, an IR profile was created. The IR data were quantified by creating a profile of the IR signal for each component at specific wave numbers over the time of the experiment, integrating the area, and comparing these areas to calibration data.

Impedance measurements were obtained by electrochemical impedance spectroscopy using a CH Instruments frequency analyzer from 100,000 to 1 Hz. A test fixture with stainless steel top electrode (1 cm radius) and aluminum bottom electrode (>2 cm radius) was used. Three measurements were made on the film at each temperature; the final measurement was used in the Zview software for modeling and analysis. The test fixture had an integrated digital micrometer for thickness measurements.

The sample thickness was measured by a digital micrometer with resolution to 1 microns and accuracy to +/- 0.1 microns. Three values of the thickness of the film plus aluminum pan were averaged. The 50 micron aluminum pan thickness was subtracted from the averaged thickness to give the film thickness.

The resistance of the film (R) for a circular fit was obtained from R2-R1, where the intercept at R1 was attributed to the interfacial resistance and the intercept at R2 was attributed to the sum of the interfacial resistance and the film's bulk resistance. The film resistance and thickness were used to calculate the ionic conductivity.

Table 3 contains the results for PVP/LiTFSI/GBL films containing 10 wt % as-received and surface-lithiated silica nanoparticles.

**Table 3. Impedance Data**

| sample number | sample identity | temp (°C) | R (ohm) | C (F) | thickness (mm) | electrode area (cm²) | Conductivity (S/cm) |
|---|---|---|---|---|---|---|---|
| 1 | GBL-PVP-LiTFSl 10% lithiated SiO₂ 40 220.5 15 wt% GBL | 27 | 1207.6 | 1.35E-09 | 116 | 3.1416 | 3.06E-06 |
| 2 | | 60 | 80.93 | | 116 | 3.1416 | 4.56E-05 |
| 3 | | | | | 116 | 3.1416 | 1.67E-05 |
| 4 | | 29 | 475.91 | | 116 | 3.1416 | 7.76E-06 |
| | | | | | | | |
| 5 | GBL-PVP-LiTFSl 10% SiO₂ 17 wt % GBL | 28 | 2134.5 | 7.66E-10 | 163 | 3.1416 | 2.43E-06 |
| 6 | | 60 | 155.44 | | 163 | 3.1416 | 3.34E-05 |
| 7 | | 40 | 543.48 | | 163 | 3.1416 | 9.55E-06 |
| 8 | | 29 | 1262.4 | | 163 | 3.1416 | 4.11E-06 |

Impedance measurements show that films (15% GBL) prepared containing 10% surface lithiated silica nanoparticles have conductivities ranging from 3.1 x 10⁻⁶ to 4.6 x 10⁻⁵ S/cm from 27 to 60°C, which are 1.3 to 1.9 times the conductivities of films (17% GBL) prepared with 10% as-received silica nanoparticles (Degussa Aerosil® 200 12 nm fumed silica). The conductivity of a control sample without nanoparticle additives was 4.9 x 10⁻⁶ S/cm (with 20 wt% GBL).

### Example 3

### Zeta-potential

Approximately 3 wt % Al₂O₃, SiO₂ or TiO2 nanoparticles were dispersed in aqueous LiOH at various pH levels.

Zeta-potential measurements were made on samples diluted with the starting LiOH solution to 0.02 to 0.03 wt % at room temperature in a static capillary cell using a Malvern NanoZetasizerZS. Particle velocity distribution was measured using a combination of laser doppler velocimetry (LDV) and phase analysis light scattering (PALS) of the light scattered at a 17° angle from a 633 nm, 4mW laser beam in an applied reversing electric field. The zeta-potential was calculated from the measured velocity, the applied field strength, and the dielectric constant and viscosity of water using the Henry Equation with Smoluchowski's approximation for aqueous media and moderate electrolyte concentration. The Mixed Mode Measurement (M3) technique was employed which consists of two measurements, one with slow field reversal (SFR), and the second with fast field reversal (FFR). SFR gives better resolution of the velocity distribution, and FFR gives poor resolution of the velocity distribution but an accurate value of the true velocity mean since the particles reach terminal velocity and the contribution to the total electrophoretic flow by the electroosmotic flow induced by the surface charge on the capillary walls is insignificant.

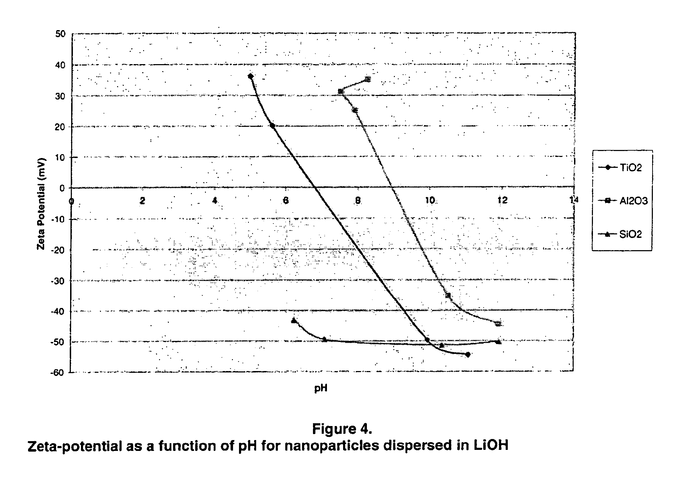

The pH was measured on the diluted samples used for the zeta-potential measurement. Figure 4 shows the zeta-potential as a function of pH for nanoparticles dispersed in LiOH.

The pH of the isoelectric point (IEP) for the alumina nanoparticles in LiOH is about 9, The pH of the isoelectric point (IEP) for the silica nanoparticles in LiOH is less than 6; literature values are typically about 2-3.

### Example 4

### Conductivity of PEO Based Electrolytes

In an Ar-filled glove box with oxygen concentration less than 1 ppm and water concentration less than 2 ppm, PEO polymer electrolyte formulations were prepared. A vial was charged with 0.3 g of PEO and half of the total solvent amount: 6.75 g acetonitrile. This vial was stirred overnight for the polymer to dissolve. A second vial was charged with 0.098 g of LiTFSI, 0.008 go of surface-lithiated titania (Li-TiO₂), and 6.75 g of solvent. This vial was capped tightly and taped. The vial was removed from the glove box and sonicated in a bath sonicator for 1 hr then returned to the glove box. The contents were combined with the polymer solution yielding a formulation with a 20:1 EO:LiTFSI molar ratio, 3 wt% total solids, and 2 wt% Li-TiO₂ in the solids. Using a syringe, 1 mL of the electrolyte formulation was syringed onto an Al sheet, and the spreading of the viscous liquid was constrained by a 25 mm diameter FETFE o-ring. The sample was dried in an oven in the glove box at 60° C for 16 hr. The dry film thickness was 30 µm. TGA/IR analysis revealed complete solvent removal. AC impedance measurements of the dry polymer film were conducted in the glove box using the Al substrate as the lower electrode and a stainless steel upper electrode as described in Example 2. While sandwiched between the electrodes, the polymer film was heated to 60° or 100° C then returned to room temperature. The value reported in Table 1 below is the conductivity calculated from room temperature (25° - 27° C) AC impedance measurements after the heat treatment.

Other solid polymer electrolyte samples were prepared by varying the type of nanoparticle or surface-lithiated nanoparticle additive. The loading was varied to 10 wt%, 2 wt%, or 1 wt%. Conductivities calculated from AC impedance measurements are shown in the table below. Better conductivities were achieved with surface-lithiated nanoparticle additives at 2 wt% and 1 wt% loading compared to the native nanoparticles.

**Table 4**

| Nanoparticle additive | Nanoparticle loading | Conductivity (S/cm) |
|---|---|---|
| None | N/A | 2.3 x 10⁻⁶ |
| SiO₂ | 10 wt% | 1.3 x 10⁻⁶ |
| Li-SiO₂ | 10 wt% | 3.1 x 10⁻⁷ |
| TiO₂ | 10 wt% | 3.9 x 10⁻⁶ |
| Li-TiO₂ | 10 wt% | 4.0 x 10⁻⁸ |
| Al₂O₃ | 10wt% | 9.2 x 10⁻⁷ |
| Li-Al₂O₃ | 10 wt% | 3.2 x 10⁻⁷ |
| SiO₂ | 2 wt% | 6.9 x 10⁻⁷ |
| Li-SiO₂ | 2 wt% | 2.9 x 10⁻⁶ |
| TiO₂ | 2 wt% | 2.2 x 10⁻⁶ |
| Li-TiO₂ | 2 wt% | 4.1 x 10⁻⁶ |
| TiO₂ | 1 wt% | 6.6 x 10⁻⁶ |
| Li-TiO₂ | 1 wt% | 7.1 x 10⁻⁶ |

### Example 5

### Assembly of Polymer Electrolyte Batteries with Surface-Lithiated Nanoparticle Additives

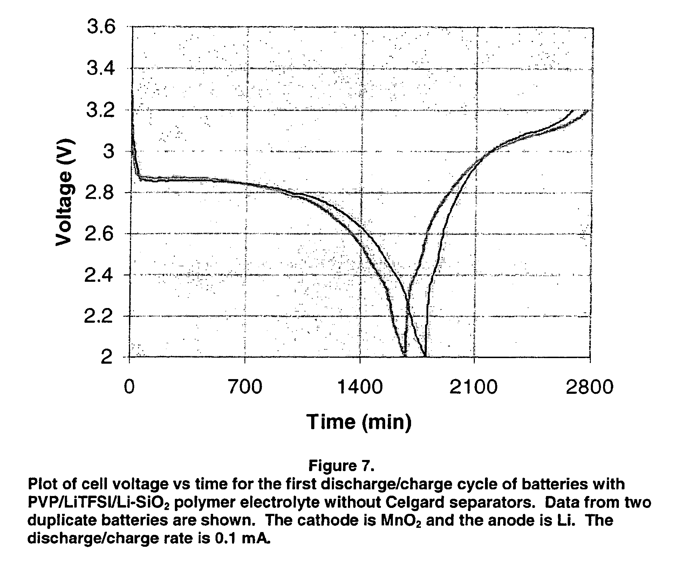

Making a polymer electrolyte battery without a porous separator involves preparing a gel polymer electrolyte (GPE) formulation, casting and drying a film, and battery assembly using both the dried film and polymer electrolyte formulation. The GPE contained 10 wt% lithiated silica. The electrolyte formulation was prepared in an Ar-filled glove box with oxygen concentration less than 1 ppm and water concentration less than 2 ppm. First, a glass vial was charged with 0.67 g LiTFSI and 4.11 g GBL solvent. After shaking the vial to dissolve the salt, the vial was set aside for several minutes, and 0.112 g of surface lithiated silica was added. The vial cap was tightened and taped, and the vial was removed from the glove box and sonicated it in a bath sonicator for 2 hrs, shaking periodically. Then the vial was returned to the glove box. To complete the formulation, 0.45 g PVP was added to the vial. The formulation was stirred and placed in an 110°-120° C oven located in the glove box for 45 minutes, stirring once during that time. Using a disposable plastic pipette the gel polymer electrolyte formulation was drop cast onto a silicone pad and rotated to spread the viscous liquid into a circle about 3-4 cm in diameter. To form a film, the electrolyte was dried in the oven at 130° C for 75 min, removed, and cooled in the glove box overnight. After carefully removing the dried film from the silicone pad, two 5/8 inch diameter circles were punched. The electrolyte thickness averaged 288 µm, and solvent content, measured by TGA/IR analysis showed 25.1 wt % GBL. Coin cell batteries were fabricated using MnO₂ cathode and Li metal anode, both cut to 9/16 inch diameter circles. A drop of gel electrolyte was placed between the cathode and electrolyte film and between the electrolyte film and anode to ensure conformal contact between the layers. The total solvent content in the electrolyte was -50 wt%. The battery stack was crimped inside of a coin cell casing. Batteries were cycled on an Arbin battery tester at 0.1 mA from 3.2 to 2.0 V. Discharge capacities from the first 10 cycles are shown in the table below, and Figure 7 shows the voltage profile of the first cycle. The batteries were cycled over 300 times.

**Table 5**

| Cycle Number | Trial 1 Discharge Capacity (mAh) * | Trial 2 Discharge Capacity (mAh) * |
|---|---|---|
| 1 | 3.01 | 2.80 |
| 2 | 1.44 | 1.37 |
| 3 | 1.36 | 1.30 |
| 4 | 1.30 | 1.25 |
| 5 | 1.247 | 1.19 |
| 6 | 1.19 | 1.14 |
| 7 | 1.11 | 1.07 |
| 8 | 1.06 | 1.02 |
| 9 | 1.01 | 0.974 |
| 10 | 0.931 | 0.903 |

| | | |
|---|---|---|
| * Duplicate batteries were tested. Trial 1 is the first battery and Trial 2 is the second. | | |

### Example 6

### GPE Batteries with Surface-Lithiated Nanoparticle Additives

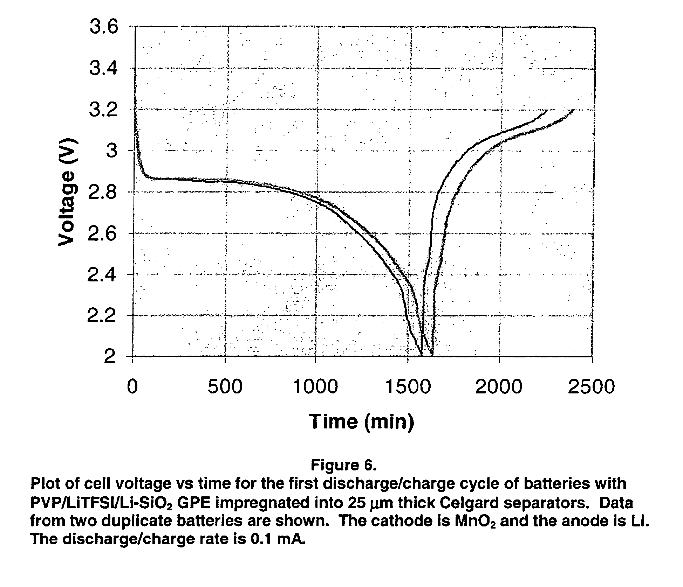

Making a gel polymer electrolyte (GPE) coin battery with Celgard® involves preparing a polymer electrolyte formulation to use as the electrolyte for the battery. The GPE contained 10 wt% lithiated silica. The electrolyte formulation was prepared in an Ar-filled glove box with oxygen concentration less than 1 ppm and water concentration less than 2 ppm. First, a glass vial was charged with 0.67 g LiTFSI and 4.11 g GBL solvent. After shaking the vial to dissolve the salt, it was set aside for several minutes, and then add 0.112 g of surface lithiated silica was added. The vial cap was tightened and taped, and the vial was removed from the glove box and sonicated it in a bath sonicator for 2 hrs, shaking periodically. Then the vial was returned to the glove box. To complete he formulation, 0.45 g PVP was added to the vial. It was stirred and placed in an oven located in the glove box at 110°-120° C for 45 minutes, stirring once during that time. (This final mixture contained - 70% GBL solvent.) Nine days later two duplicate batteries were assembled using the GPE formulation. Prior to assembly the formulation was sonicated an additional 1 hr. Coin cells were fabricated using MnO₂ cathode cut to 9/16 inch diameter circle, Celgard separator cut to 5/8 inch diameter, and Li metal anode cut to 9/16 inch diameter. Two drops of the gel electrolyte was placed on the MnO₂ cathode. Then Celgard® separator was placed on top of the gel-covered cathode. Finally an additional 1 drop of gel electrolyte was added on top of the Celgard followed by the Lithium metal anode. The battery stack was crimped inside of a coin cell casing. Batteries were cycled on an Arbin battery tester at 0.1 mA from 3.2 to 2.0 V. Discharge capacities from the first 10 cycles are shown in the table below, and Figure 6 shows the voltage profile of the first cycle. The batteries were cycled over 300 times.

**Table 6**

| Cycle Number | Trial 1 Discharge Capacity (mAh) * | Trial 2 Discharge Capacity (mAh) * |
|---|---|---|
| 1 | 2.63 | 2.72 |
| 2 | 1.15 | 1.26 |
| 3 | 1.07 | 1.22 |
| 4 | 1.03 | 1.12 |
| 5 | 0.805 | 1.01 |
| 6 | 0.7147 | 0.937 |
| 7 | 0.670 | 0.842 |
| 8 | 0.504 | 0.757 |
| 9 | 0.512 | 0.707 |
| 10 | 0.578 | 0.5504 |

| | | |
|---|---|---|
| * Duplicate batteries were tested. Trial 1 is the first battery and Trial 2 is the second. | | |

### Example 7

### Liquid Electrolyte Lithium-ion Batteries with Surface-Lithiated Nanoparticle Additives

Li-ion coin batteries were made that contain a liquid electrolyte formulation containing 2-wt% lithiated silica and Celgard® separator. The electrolyte formulation was prepared in an Ar-filled glove box with oxygen concentration less than 1 ppm and water concentration less than 2 ppm. First, the liquid electrolyte was prepared in a 25 ml volumetric flask by adding 3.73 g Li₂B₁₂F₁₂ salt into a 3:7 (wt/wt) solution of EC:DEC solvent. The solution was heated in a 50° C oven, shaking periodically until the salt dissolved. Then 0.04 g LiPF₆ was added with shaking, and solvent was added to bring the solution up to volume. Next 5 grams of the EC:DEC solution were charged to a glass vial and 0.1 grams lithiated silica powder was added. The vial cap was tightened and taped, and the vial was removed from the glove box and sonicated in a bath sonicator for 2 hrs, shaking periodically. After sonication was complete the vial was returned to the glove box. Duplicate coin cell batteries were fabricate by using 2 drops of the electrolyte on the Gen 2 cathode cut to a 9/16 inch diameter circle (Gen 2 cathode is LiMn_{1/3}Ni_{1/3}Co_{1/3}O₂). Then the Celgard® separator cut to 5/8 inch diameter was placed on top of the cathode. Finally, an additional 1 or 2 drops of electrolyte was added on top of the Celgard followed by the GDR (natural graphite) anode. The battery stack was crimped inside of a coin cell casing.

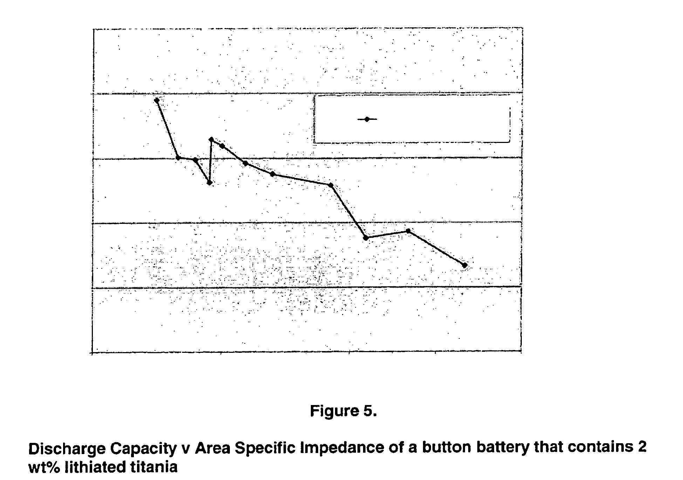

Batteries were cycled on an Arbin battery tester and area specific impedance (ASI) measurements were made periodically during cycling. All testing was done at room temperature. For the first cycle, the battery was charged at 0.1 mA to 4.1 V then discharged down to 3.0 V. All subsequent cycles were at 0.7 mA over the same voltage range. ASI was measured periodically at 0.7 mA using the current interrupt technique reported in Journal of Power Sources, 101 (2001) 238-247. The table below contains values of discharge capacities and ASI. A plot of ASI versus discharge capacity is shown in Figure 5. The minimum ASI measured by the current interrupt technique is reported (usually at 60-100% state of charge)

**Table 7**

| Cycle Number | Discharge Capacity (mAh) | ASI (ohm·cm²)* |
|---|---|---|
| 2 | 1.74 | 66.46 |
| 12 | 1.47 | 93.0 |
| 22 | 1.28 | 88.1 |
| 32 | 1.11 | 129.3 |
| 82 | 0.840 | 137.8 |
| 132 | 0.711 | 146.3 |
| 182 | 0.603 | 159.8 |
| 212 | 0.552 | 164.7 |
| 262 | 0.544 | 131.4 |
| 312 | 0.478 | 149.1 |
| 512 | 0.398 | 150.9 |
| 712 | 0.296 | 195.2 |

| | | |
|---|---|---|
| * Minimum ASI reported; usually measured at 60-100% state of charge. | | |

### Example 8

### Lithium Battery Using SPE with PEO/LiTFSI/Li-TiO₂ Nanoparticle

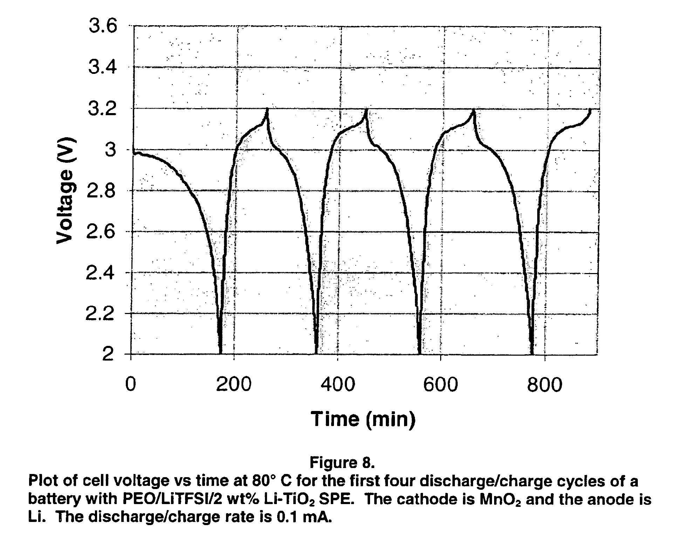

A lithium battery was fabricated and tested using a solvent-free PEO based electrolyte with surface-lithiated nanoparticle additives. A dispersion was prepared as outlined in Example 4 that was 3 wt% total solids in acetonitrile. The solids composition was PEO/LiTFSI/Li-TiO₂ with a 20:1 EO:LiTFSI molar ratio, and 2 wt% Li-TiO₂. Using a syringe, 1 mL of the electrolyte formulation was syringed onto a sheet of MnO₂ cathode on aluminum. The spreading of the viscous liquid was constrained by a 25 mm diameter FETFE o-ring. The sample was dried in an oven in the glove box at 60° C for 16 hr. The dry film thickness was 30 µm. Using a hole punch, a 5/8 inch diameter hole was punched out of the electrolyte and cathode stack. A disc of lithium was cut to 9/16 inch diameter to use as the battery anode. The lithium was placed centered on top of the polymer electrolyte. Stainless steel current collectors were placed on the top and the bottom of the battery, and the stack was sealed inside of a 2032 coin cell case using a crimp tool. The cell was annealed at 60° C for 6 hr. Then it was put into an oven at 80° C, and cycling was started using an Arbin battery tester. The battery was cycled at 0.1 mA from 3.0 to 2.2 V. Discharge capacity as a function of cycle number is shown in the table below. Figure 8 shows the cell voltage as a function of time.

**Table 8**

| Cycle Number | Discharge Capacity (mAh) |
|---|---|
| 1 | 0.289 |
| 2 | 0.168 |
| 3 | 0.180 |
| 4 | 0.192 |
| 5 | 0.202 |

## Claims

1. . A composition comprising nanoparticles wherein at least a portion of the surface of the nanoparticles are associated with lithium ions.

2. . The composition of Claim 1 wherein the nanoparticles comprise at least one metal oxide particle.

3. . The composition of Claim 1 wherein the nanoparticles comprise at least one ceramic.

4. . The composition of Claim 1 wherein the nanoparticles are produced by a process comprising exposing the nanoparticles to a solution comprising lithium ions wherein the solution has a pH greater than the isoelectric point of the nanoparticles.

5. The composition of Claim 1 wherein the nanoparticles comprise at least one member selected from the group consisting of Al2O3, SiO2, and TiO2.

6. The composition of Claim 1 wherein the amount of lithium ions is about 0.01wt.% to about 10wt.% of the composition.

7. An electrolyte comprising nanoparticles having at least a portion of the surface thereof associated with lithium and optionally at least one solvent and optionally at least one salt.

8. The electrolyte of Claim 7 wherein the salt comprises at least one lithium salt.

9. . The electrolyte of Claim 7 wherein further comprising at least one polymer.

10. . The electrolyte of Claim 9 wherein the polymer comprises poly(ethylene oxide).

11. The electrolyte of Claim 7 wherein the electrolyte comprises at least one solvent.

12. . The electrolyte of Claim 11 wherein the solvent comprises at least one carbonate.

13. . The electrolyte of Claim 7 wherein the nanoparticles comprise the composition of Claim 6.

14. . The electrolyte of Claim 9 comprising a thin film.

15. An electrochemical cell comprising an anode, a cathode and an electrolyte wherein at least one of the anode, cathode and electrolyte comprise nanoparticles having at least a portion of the surface thereof associated with lithium.

16. . The electrochemical cell of Claim 15 wherein the cell further comprises a separator and the separator comprises the nanoparticles.

17. . The electrochemical cell of Claim 15 wherein the electrolyte comprises the electrolyte of Claim 12.

18. . The electrochemical cell of Claim 15 wherein the nanoparticles comprise the composition of Claim 5.

19. The electrochemical cell of Claim 15 wherein the anode comprises at least one member selected from the group consisting of lithium, carbon, graphite and compounds and alloys thereof.

20. The electrochemical cell of Claim 15 wherein the cathode comprises at least one member selected from the group consisting of LiCoO₂, LiNi₍₁₋ₓ₎CoₓO₂, LiMn₂O₄, LiFePO₄, vanadium oxide, manganese oxide and mixtures thereof.
